# EUROPEAN PATENT SPECIFICATION

(11) **EP 4 607 026 B1**
(45) Date of publication and mention of the grant of the patent: **07.10.2026**
(21) Application number: 24425004.9
(22) Date of filing: 23.02.2024
(51) Int. Cl.: F03H 1/00, F02K 9/62, F02K 9/97, H05H 1/54, B64G 1/40

(54) **ROCKET ENGINE, PROPULSION SYSTEM AND PROPULSION METHOD FOR VEHICLES, IN PARTICULAR FOR SPACE VEHICLES**
RAKETENTRIEBWERK, ANTRIEBSSYSTEM UND ANTRIEBSVERFAHREN FÜR FAHRZEUGE, INSBESONDERE FÜR RAUMFAHRZEUGE
MOTEUR-FUSÉE, SYSTÈME DE PROPULSION ET PROCÉDÉ DE PROPULSION POUR VÉHICULES, EN PARTICULIER POUR VÉHICULES SPATIAUX

(43) Date of publication of application: 27.08.2025
(73) Proprietor: CTI Foodtech S.r.l., 84131 Salerno (SA) (IT); Crescenzo, Giorgio, 84098 Pontecagnano Faiano (SA) (IT)
(72) Inventor: Crescenzo, Giorgio, 84098 Pontecagnano Faiano (SA) (IT)
(74) Representative: Studio Torta S.p.A.

(56) References cited:
- CN-A- 116 838 557
- RU-C1- 2 733 076
- RU-C1- 2 738 136
- US-A- 3 173 248
- US-A1- 2009 139 206
- US-A1- 2009 229 240
- ROVEY JOSHUA L ET AL: "Review of multimode space propulsion", PROGRESS IN AEROSPACE SCIENCES, OXFORD, GB, vol. 118, 29 August 2020 (2020-08-29), XP086322277, ISSN: 0376-0421, [retrieved on 20200829], DOI: 10.1016/J.PAEROSCI.2020.100627

## Description

### TECHNICAL FIELD

The present invention concerns a rocket engine, a propulsion system and method for vehicles, in particular for space vehicles.

Rocket engines exploit the principle of action and reaction to produce a thrust transforming the kinetic energy transferred to the propellant. In practice, the propellant is accelerated and subsequently ejected in an opposite direction to the desired thrust direction.

The thrust F generated by a rocket engine is determined by the product of the ejection velocity of the propellant from the engine *vₑ* and the flow of propellant ejected *ṁ* $F = \dot{m} \cdot {v}_{e}$ in which F is the propulsion force measured in Newton, *ṁ* is the mass ejected from the reactor expressed in kg/s, and *vₑ* is the velocity expressed in m/s.

The efficiency of a rocket engine is commonly evaluated by means of the specific impulse *Iₛₚ,* which represents the inverse of the specific consumption of propellant cs. This parameter is directly proportional to the propellant ejection velocity. Referring to the equation in the preceding paragraph, the specific impulse provides an indication of the efficiency with which a rocket engine exploits its propellant flow to obtain a thrust. ${I}_{sp} = \frac{{v}_{e}}{{g}_{0}} = \frac{F}{\dot{m} ∗ {g}_{0}} = \frac{1}{cs ∗ {g}_{0}}$

The specific impulse *Iₛₚ* is measured in seconds [s] ; where g₀ is the gravitational constant at sea level, equivalent to 9.81 metres per square second [m/s²], F is the propulsive thrust, measured in Newton [N], cs is the specific consumption of propellant in terms of thrust, expressed in kilograms per Newton-second [kg/Ns].

### STATE OF THE ART

As described in the document US 2009/229,240 A1, rocket engines are grouped into different categories according to propulsion type. The two categories of rocket engines most widely used are chemical engines and electric engines. The so-called chemical rocket engines are based on a chemical reaction of the propellant and are characterized by the high thrusts generated due to the capacity to eject large quantities of mass generated by exothermic processes. However, the efficiency of this type of rocket engine is limited by the thermodynamic processes involved.

Electric engines are based on the use of electromagnetic fields for acceleration of the propellant, hence they have low consumption but they are also characterized by relatively low thrusts, limited by the high energy demand per unit of mass processed.

The document US 2009/229,240 A1 describes the production of a hybrid chemical-electric rocket engine aimed at obtaining a flexible technology.

Document RU 2,738,136 C1 teaches injecting and igniting fuel and oxidizer in the combustion chamber. The resulting combustion products are ionized using a corona forming electrode.

### SUBJECT OF THE PRESENT INVENTION

The object of the present invention is to produce a rocket engine able to further improve the performances of rocket engines in the known **art.**

In accordance with the present invention, a rocket engine is provided for vehicles, in particular for space vehicles, the rocket engine comprising:
- a convergent-divergent nozzle having a minimum passage section configured to guide a flow of propellant in a given direction;
- a reaction chamber arranged upstream of the convergent-divergent nozzle and in which the propellant is subject to a chemical reaction that generates energy in the form of heat;
- an ionization device, which is configured to ionize the propellant and comprises at least one first ionization station arranged within the reaction chamber for plasma assisted combustion; and a second ionization station in the area of the reaction chamber and arranged between the first ionization station and said minimum passage section ;
- a plasma propulsion engine accelerator downstream of the convergent-divergent nozzle.

The present invention introduces a first ionization station within the reaction chamber. This configuration allows the properties of the chemical reaction process to be locally improved, at least partially beginning to generate the plasma which is subsequently accelerated via the plasma propulsion engine accelerator at the outlet of the convergent-divergent nozzle. The interaction between the plasma and the chemical reaction zone, in particular the combustion zone, is complex and difficult to predict. The phenomenon of 'plasma assisted combustion' improves the stability of the flame, catalyzes the combustion processes, allows more stable and rapid combustion reactions to be obtained, also in adverse conditions, allows the use of leaner mixtures, and reduces the polluting products of unburnt material. Plasma assisted combustion takes place when a device generates an electric field near a spatial region in which a combustion reaction occurs. In the case of sufficiently intense electromagnetic interactions, the chemical species present in said region absorb energy, first kinetically, then electronically, reaching first a level such as to allow the dissociation thereof and subsequently the ejection of electrons (namely, achieving ionization). Said chemical species therefore constitute a plasma, within which constant interactions occur between free electrons and ions (sometimes free radicals). These species are characterized by a strong chemical reactivity, which therefore allows the combustion process to be started and sustained, also in conditions in which it would not be able to sustain itself in a stable manner. The ionized propellant in the plasma region mentioned continues its motion along the engine axis, recombining and partially losing its plasma state, but a fraction of it maintains sufficient thermal energy to remain ionized. Said event indicates that the propellant emitted from the engine is partially composed of ionized particles, and can therefore be influenced by an external electromagnetic field.

For a plasma to be sustained, the electromagnetic interactions between its particles must prevail over those due to the kinetic collisions, a requirement that can be difficult to meet in high pressure environments. This is due to the fact that, at high pressures, the frequency of the collisions between particles increases, thus favouring cooling and recombination of the ions and the electrons, leading to decay of the plasma. Therefore, maintaining a stable plasma requires careful balancing of the operating conditions to prevent premature decay thereof, especially after leaving the primary ionization zone.

This further ionization contributes to generating further plasma and further improving the chemical reaction process.

In the case in point, the accelerator for plasma propulsion engines comprises:
- an electric field generator;
- a magnetic field generator.

In practice, the electric field generator is configured to generate an electric field parallel to the advancement direction of the propellant while the magnetic field generator is configured to generate a radial magnetic field perpendicular to the advancement direction of the propellant. Both the magnetic field and the electric field cause an acceleration of the propellant as it is ejected from the rocket engine.

The electric field generator must guarantee a linear electric field, aligned with the engine axis, while the magnetic field generator must guarantee a magnetic field that acts as a selector, determining different trajectories for ionized particles having opposite charge. The electric field imposes an acceleration on the particles of ionized propellant, allowing direct control over the velocity of the outgoing propellant. Since the specific impulse is defined by this relation, controlling the velocity of the particles means directly influencing the engine performance. In this way the propellant can be accelerated in variable modulus (by introducing energy) or also decelerated (by absorbing energy from the device). The magnetic field, on the other hand, regulates the action of the electric field: the plasma coming out of the combustion chamber is almost neutral, composed of positively and negatively charged particles. Simply accelerating the flow would produce a null effect, since the contribution of quantity of motion of a group of particles would be annulled by the opposite one of the opposite charge group. Magnetic fields designed to rapidly divert the electrons, without significantly influencing the trajectories of the ions, remove the negative contribution of the electrons, allowing only the positive ionized particles to determine the flow properties.

In particular, a preferred configuration entails arranging the magnetic field generator around the electric field generator. In the case in point, the electric field generator comprises acceleration electrodes.

The electric field generator comprises at least two acceleration electrodes, designed to be able to interact directly with the environment downstream of the engine outlet section. By means of an electrical energy distribution system, they are supplied with direct current to establish an electric potential gradient in the spatial region between them.

In accordance with an embodiment of the present invention, the ionization device comprises a third ionization station at an outlet of the convergent-divergent nozzle. In fact, the thermodynamic expansion process characteristic of a convergent-divergent nozzle involves another region which is highly critical for survival of the plasma. The rapid conversion of energy from thermal to kinetic undergone by the propellant during expansion, in addition to its consequent density reduction, configure a condition in which the remaining plasma is partly deprived of the energy necessary to maintain its state. To actuate the electronic acceleration process for plasma propulsion engines previously described, the addition of a further ionization station is expedient, in order to exploit and amplify the plasma fraction that has survived the expansion and make the propellant even more subject to influence by external actuations.

The three ionization stations can be selectively activated in parallel in an alternate manner and other combinations in a wide range of modulations excite an intense electric field that strikes a plasma arc in the spatial region between said ionization stations.

A further object of the present invention is to provide a propulsion system for vehicles, in particular for soace vehicles that is able to improve the performance of the known systems.

In accordance with the present invention, a propulsion system is provided for vehicles, in particular space vehicles, the system comprising:
- a rocket engine for vehicles as claimed in any of the preceding claims; and
- at least one tank configured to contain the propellant and selectively communicating with the reaction chamber.

In this way, the system is able to improve the performance of the specific impulse and reduce fuel consumption.

In particular, the system comprises an electrical energy source to power the ionization device and the accelerator for plasma propulsion engines.

The energy source can be of renewable type such as, for example, solar energy and storage systems. The type of electrical energy source depends on the mission profile. For launch missions, where high power is required, the use of a high efficiency turbogenerator is preferable. For orbital manoeuvres, on the other hand, the use of solar panels or radioisotope generators is more appropriate.

In further detail, the system provides an electrical energy distribution bus to connect the electrical energy source to the ionization device and to the plasma propulsion engine accelerator. In practice, the bus is connected to each ionization station.

In particular, the system provides a power control unit configured to modulate the electrical energy supplied to the ionization device and to the plasma propulsion engine accelerator and modulate each ionization station independently of the other ionization stations.

The power control unit is also configured to transfer energy to any storage units when the engine is in deceleration mode.

A further object of the present invention is to provide a propulsion method for vehicles, in particular for space vehicles, which is free from the drawbacks of the known art.

In accordance with the present invention, a propulsion method is provided for vehicles, in particular for space vehicles, the method comprising:
- generating a chemical reaction of the propellant and developing energy in the form of pressure in a reaction chamber;
- ionizing at least partly the propellant in the reaction chamber to generate plasma by means of a first ionization station for plasma assisted combustion;
- ionizing the propellant by means of a second ionization station (16) arranged in the area of the reaction chamber (5) between the first ionization station (15) and said minimum passage section (Sₘᵢₙ);
- guiding an at least partly ionized propellant flow in a given direction through a convergent-divergent nozzle having a minimum passage section; and
- accelerating the at least partly ionized flow by means of a plasma propulsion engine accelerator downstream of the convergent-divergent nozzle.

In this way it is possible to improve the specific impulse and reduce the consumption of propellant while obtaining the same performance.

### BRIEF DESCRIPTION OF THE FIGURES

Further characteristics and advantages of the present invention will appear clear from the following description of non-limiting embodiment examples thereof, with reference to the Figures of the attached drawings, in which:
- Figure 1 is a schematic view, with parts removed for clarity, of a propulsion system produced in accordance with the present invention of a rocket engine for vehicles produced in accordance with the present invention;
- Figure 2 is a schematic view, with parts removed for clarity, of a rocket engine for vehicles produced in accordance with the present invention;
- Figure 3 is a schematic view, with parts removed for clarity and on an enlarged scale, of a detail of the rocket engine of Figure **2****.**

### PREFERRED EMBODIMENT OF THE INVENTION

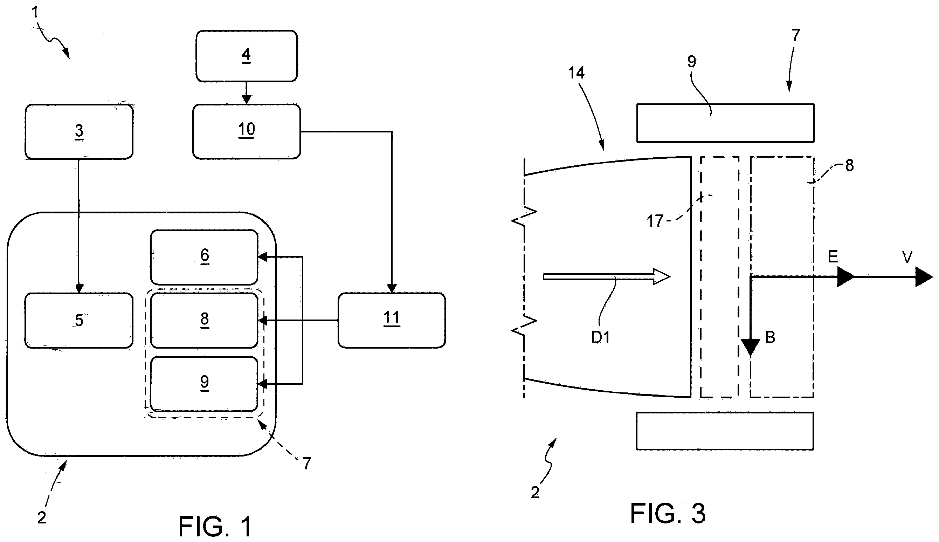

With reference to Figure 1, the number 1 indicates overall a propulsion system for vehicles, in particular for space vehicles, not shown in the attached Figures.

The system 1 comprises a rocket engine 2, at least one tank 3, which is configured to contain a propellant and feed the propellant to the rocket engine 2 where the propellant reacts and develops energy in the form of heat; and a source of electrical energy 4 to control the rocket engine **2.**

The rocket engine 2 comprises a reaction chamber 5 in which the propellant reacts and develops energy in the form of heat, an ionization device 6 to ionize the propellant and form plasma, and a plasma propulsion engine accelerator 7, which comprises an electric field generator 8 and a magnetic field generator 9.

The system 1 comprises an electrical energy distribution bus 10 to connect the electrical energy source 4 to the ionization device 6 and to the plasma propulsion engine accelerator 7, and a power control unit 11 to modulate the electrical energy supplied to the ionization device 6 and to the plasma propulsion engine accelerator 7.

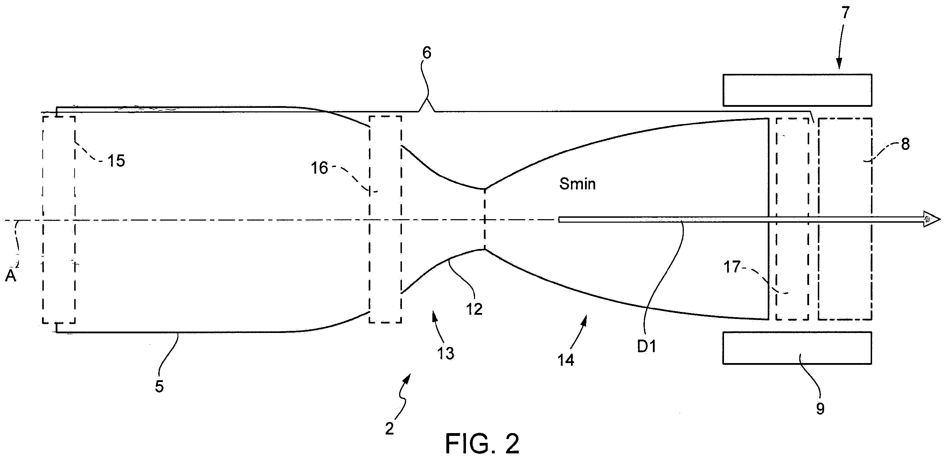

With reference to Figure 2, the rocket engine 2 extends along an axis A and comprises, downstream of the reaction chamber 5, a convergent-divergent nozzle 12 configured to guide a propellant flow in a direction D1 parallel to the axis A and having a minimum passage section Sₘᵢₙ that ideally divides the nozzle 12 into a portion upstream 13 and a portion downstream 14 of the minimum passage section Sₘᵢₙ, commonly called throat in the specific reference sector.

The ionization device 6 comprises three ionization stations 15, 16 and 17 distributed along the nozzle 12. The stations 15 and 16 are arranged in the portion upstream near the reaction chamber 5 while the ionization station 17 is arranged at the outlet of the nozzle 12.

The plasma propulsion engine accelerator 7 is arranged at the outlet of the nozzle 12 and, in particular, the electric field generator 8 is arranged downstream of the ionization station 17, and the magnetic field generator 9 is arranged around the electric field generator 8 at the outlet of the nozzle 12.

The electric field generator 8 comprises acceleration electrodes while the magnetic field generator 9 comprises opposite solenoids at the ends of a diameter of the outlet section.

With reference to Figure 3, the electric field generator 8 generates an electric field E in the direction D1 while the magnetic field generator 9 generates a magnetic field B in a radial direction transversely to the direction D1 to accelerate the plasma and impart a velocity V to the plasma.

Lastly, it is evident that the present invention comprises further variations of the embodiments described included in the protective scope of the attached claims.

## Claims

1. A rocket engine for vehicles, in particular for space vehicles, the rocket engine (2) comprising:
- a convergent-divergent nozzle (12) having a minimum passage section (Sₘᵢₘ) configured to guide a propellant flow in a given direction;
- a reaction chamber (5) arranged upstream of the convergent-divergent nozzle (12) and in which the propellant is subject to a chemical reaction that generates energy in the form of heat;
- an ionization device (6), which is configured to ionize the propellant and comprises at least a first ionization station (15) arranged within the reaction chamber (5) for plasma assisted combustion; and a second ionization station (16) in the area of the reaction chamber (5) and arranged between the first ionization station (15) and said minimum passage section (Sₘᵢₘ); and
- a plasma propulsion engine accelerator (7) downstream of the convergent-divergent nozzle (12).

2. The rocket engine as claimed in claim 1, wherein the plasma propulsion engine accelerator (7) comprises:
- an electric field generator (8); and
- a magnetic field generator (9).

3. The rocket engine as claimed in claim 2, wherein the magnetic field generator (9) is arranged around the electric field generator (8).

4. The rocket engine as claimed in any one of the preceding claims, wherein the electric field generator (8) comprises acceleration electrodes.

5. The rocket engine as claimed in claim 4, wherein the ionization device (6) comprises a third ionization station (17) at an outlet of the convergent-divergent nozzle (12).

6. A propulsion system for vehicles, in particular space vehicles, the system (1) comprising:
- a rocket engine (2) for vehicles as claimed in any of the preceding claims; and
- at least one tank (3) configured to contain the propellant and selectively communicating with the reaction chamber (5).

7. The system as claimed in claim 6, comprising an electrical energy source (4) to power the ionization device (6) and the plasma propulsion engine accelerator (7).

8. The system as claimed in claim 7, comprising an electrical energy distribution bus (10) to connect the electrical energy source (4) to the ionization device (6) and to the plasma propulsion engine accelerator (7).

9. The system as claimed in claim 8, comprising a power control unit (11) configured to modulate the electrical energy supplied to the ionization device (6) and to the plasma propulsion engine accelerator (7).

10. A propulsion method for vehicles, in particular for space vehicles, the method comprising:
- generating a chemical reaction of the propellant and developing energy in the form of pressure in a reaction chamber (5) ;
- ionizing at least partly the propellant in the reaction chamber (5) to generate plasma by means of a first ionization station (15) for plasma assisted combustion;
- guiding a flow of at least partly ionized propellant in a given direction through a convergent-divergent nozzle (12) having a minimum passage section (Sₘᵢₙ);
- ionizing the propellant by means of a second ionization station (16) arranged in the area of the reaction chamber (5) between the first ionization station (15) and said minimum passage section (Sₘᵢₙ) ; and
- accelerating the at least partly ionized flow by means of a plasma propulsion engine accelerator (7) downstream of the convergent-divergent nozzle (12).

11. The method as claimed in claim 10 comprising ionizing the propellant by means of a third ionization station (17) arranged at the outlet of the convergent-divergent nozzle (12).

12. The method as claimed in claim 10 or 11 comprising supplying the ionization device (6) and the plasma propulsion engine accelerator (7) with electrical energy.

13. The method as claimed in claim 12 comprising modulating the electrical energy supplied to the ionization device (6) and to the plasma propulsion engine accelerator (7).

## Patentansprüche

1. Raketentriebwerk für Fahrzeuge, insbesondere für Raumfahrzeuge, wobei das Raketentriebwerk (2) umfasst:
- eine konvergent-divergente Düse (12) mit einem minimalen Durchgangsquerschnitt (Sₘᵢₙ), die konfiguriert ist, um einen Treibstoffstrom in eine gegebene Richtung zu leiten;
- eine Reaktionskammer (5), die stromaufwärts der konvergent-divergenten Düse (12) angeordnet ist und in der der Treibstoff einer chemischen Reaktion unterworfen wird, die Energie in Form von Wärme erzeugt;
- eine Ionisierungsvorrichtung (6), die konfiguriert ist, den Treibstoff zu ionisieren, und mindestens eine erste Ionisierungsstation (15) umfasst, die innerhalb der Reaktionskammer (5) für eine plasmaunterstützte Verbrennung angeordnet ist; und eine zweite Ionisierungsstation (16) im Bereich der Reaktionskammer (5) und angeordnet zwischen der ersten Ionisierungsstation (15) und dem genannten minimalen Durchgangsquerschnitt (Sₘᵢₙ); und
- einen Plasmantriebsbeschleuniger (7) stromabwärts der konvergent-divergenten Düse (12).

2. Das Raketentriebwerk nach Anspruch 1, wobei der Plasmantriebsbeschleuniger (7) umfasst:
- einen elektrischen Feldgenerator (8); und
- einen magnetischen Feldgenerator (9).

3. Das Raketentriebwerk nach Anspruch 2, wobei der magnetische Feldgenerator (9) um den elektrischen Feldgenerator (8) angeordnet ist.

4. Das Raketentriebwerk nach einem der vorhergehenden Ansprüche, wobei der elektrische Feldgenerator (8) Beschleunigungselektroden umfasst.

5. Das Raketentriebwerk nach Anspruch 4, wobei die Ionisierungsvorrichtung (6) eine dritte Ionisierungsstation (17) an einem Austritt der konvergent-divergenten Düse (12) umfasst.

6. Ein Antriebssystem für Fahrzeuge, insbesondere für Raumfahrzeuge, wobei das System (1) umfasst:
- ein Raketentriebwerk (2) für Fahrzeuge nach einem der vorhergehenden Ansprüche; und
- mindestens ein Tank (3), der konfiguriert ist, den Treibstoff zu enthalten und selektiv mit der Reaktionskammer (5) zu kommunizieren.

7. Das Antriebssystem nach Anspruch 6, umfassend eine elektrische Energiequelle (4), um die Ionisierungsvorrichtung (6) und den Plasmantriebsbeschleuniger (7) mit Energie zu versorgen.

8. Das Antriebssystem nach Anspruch 7, umfassend einen elektrischen Energieverteilungsbus (10), um die elektrische Energiequelle (4) mit der Ionisierungsvorrichtung (6) und dem Plasmantriebsbeschleuniger (7) zu verbinden.

9. Das Antriebssystem nach Anspruch 8, umfassend eine Leistungssteuereinheit (11), die konfiguriert ist, die der Ionisierungsvorrichtung (6) und dem Plasmantriebsbeschleuniger (7) zugeführte elektrische Energie zu modulieren.

10. Ein Antriebsverfahren für Fahrzeuge, insbesondere für Raumfahrzeuge, wobei das Verfahren umfasst:
- Erzeugen einer chemischen Reaktion des Treibstoffs und Entwickeln von Energie in Form von Druck in einer Reaktionskammer (5);
- zumindest teilweises Ionisieren des Treibstoffs in der Reaktionskammer (5) zur Erzeugung von Plasma mittels einer ersten Ionisierungsstation (15) für eine plasmaunterstützte Verbrennung;
- Leiten eines Stroms von zumindest teilweise ionisiertem Treibstoff in eine gegebene Richtung durch eine konvergent-divergente Düse (12) mit einem minimalen Durchgangsquerschnitt (Sₘᵢₙ);
- Ionisieren des Treibstoffs mittels einer zweiten Ionisierungsstation (16), die im Bereich der Reaktionskammer (5) zwischen der ersten Ionisierungsstation (15) und dem genannten minimalen Durchgangsquerschnitt (Sₘᵢₙ) angeordnet ist; und
- Beschleunigen des zumindest teilweise ionisierten Stroms mittels eines Plasmantriebsbeschleunigers (7) stromabwärts der konvergent-divergenten Düse (12).

11. Das Verfahren nach Anspruch 10, umfassend das Ionisieren des Treibstoffs mittels einer dritten Ionisierungsstation (17), die am Austritt der konvergent-divergenten Düse (12) angeordnet ist.

12. Das Verfahren nach Anspruch 10 oder 11, umfassend das Zuführen von elektrischer Energie zu der Ionisierungsvorrichtung (6) und dem Plasmantriebsbeschleuniger (7).

13. Das Verfahren nach Anspruch 12, umfassend das Modulieren der der Ionisierungsvorrichtung (6) und dem Plasmantriebsbeschleuniger (7) zugeführten elektrischen Energie.

## Revendications

1. Moteur-fusée pour véhicules, en particulier pour véhicules spatiaux, le moteur-fusée (2) comprenant :
- une tuyère convergente-divergente (12) présentant une section de passage minimale (Sₘᵢₙ) configurée pour guider un flux de propergol dans une direction donnée ;
- une chambre de réaction (5) agencée en amont de la tuyère convergente-divergente (12) et dans laquelle le propergol est soumis à une réaction chimique qui génère de l'énergie sous forme de chaleur ;
- un dispositif d'ionisation (6), qui est configuré pour ioniser le propergol et comprend au moins un premier poste d'ionisation (15) agencé à l'intérieur de la chambre de réaction (5) pour une combustion assistée par plasma ; et un second poste d'ionisation (16) dans la zone de la chambre de réaction (5) et agencé entre le premier poste d'ionisation (15) et ladite section de passage minimale (Sₘᵢₙ) ; et
- un accélérateur de moteur à propulsion plasma (7) en aval de la tuyère convergente-divergente (12).

2. Moteur-fusée selon la revendication 1, dans lequel l'accélérateur de moteur à propulsion plasma (7) comprend :
- un générateur de champ électrique (8) ; et
- un générateur de champ magnétique (9).

3. Moteur-fusée selon la revendication 2, dans lequel le générateur de champ magnétique (9) est agencé autour du générateur de champ électrique (8).

4. Moteur-fusée selon l'une quelconque des revendications précédentes, dans lequel le générateur de champ électrique (8) comprend des électrodes d'accélération.

5. Moteur-fusée selon la revendication 4, dans lequel le dispositif d'ionisation (6) comprend un troisième poste d'ionisation (17) à une sortie de la tuyère convergente-divergente (12).

6. Système de propulsion pour véhicules, en particulier pour véhicules spatiaux, le système (1) comprenant :
- un moteur-fusée (2) pour véhicules selon l'une quelconque des revendications précédentes ; et
- au moins un réservoir (3) configuré pour contenir le propergol et communiquant sélectivement avec la chambre de réaction (5).

7. Système selon la revendication 6, comprenant une source d'énergie électrique (4) pour alimenter le dispositif d'ionisation (6) et l'accélérateur de moteur à propulsion plasma (7).

8. Système selon la revendication 7, comprenant un bus de distribution d'énergie électrique (10) pour connecter la source d'énergie électrique (4) au dispositif d'ionisation (6) et à l'accélérateur de moteur à propulsion plasma (7).

9. Système selon la revendication 8, comprenant une unité de commande de puissance (11) configurée pour moduler l'énergie électrique fournie au dispositif d'ionisation (6) et à l'accélérateur de moteur à propulsion plasma (7).

10. Procédé de propulsion pour véhicules, en particulier pour véhicules spatiaux, le procédé comprenant :
- générer une réaction chimique du propergol et développer de l'énergie sous forme de pression dans une chambre de réaction (5) ;
- ioniser au moins partiellement le propergol dans la chambre de réaction (5) pour générer du plasma au moyen d'un premier poste d'ionisation (15) pour une combustion assistée par plasma ;
- guider un flux de propergol au moins partiellement ionisé dans une direction donnée à travers une tuyère convergente-divergente (12) présentant une section de passage minimale (Sₘᵢₙ) ;
- ioniser le propergol au moyen d'un second poste d'ionisation (16) agencé dans la zone de la chambre de réaction (5) entre le premier poste d'ionisation (15) et ladite section de passage minimale (Sₘᵢₙ) ; et
- accélérer le flux au moins partiellement ionisé au moyen d'un accélérateur de moteur à propulsion plasma (7) en aval de la tuyère convergente-divergente (12).

11. Procédé selon la revendication 10, comprenant l'ionisation du propergol au moyen d'un troisième poste d'ionisation (17) agencé à la sortie de la tuyère convergente-divergente (12).

12. Procédé selon la revendication 10 ou 11 comprenant la fourniture d'énergie électrique au dispositif d'ionisation (6) et à l'accélérateur de moteur à propulsion plasma (7).

13. Procédé selon la revendication 12, comprenant la modulation de l'énergie électrique fournie au dispositif d'ionisation (6) et à l'accélérateur de moteur à propulsion plasma (7).
